# EUROPEAN PATENT SPECIFICATION

(11) **EP 2 363 911 B1**
(45) Date of publication and mention of the grant of the patent: **14.08.2013**
(21) Application number: 10173944.9
(22) Date of filing: 25.08.2010
(51) Int. Cl.: H01M 10/04

(54) **Secondary battery and battery module including the same**
Sekundärbatterie und Batteriemodul damit
Batterie secondaire et module de batterie l'incluant

(30) Priority: 18.02.2010 US 305922 P; 12.07.2010 US 834868
(43) Date of publication of application: 07.09.2011
(73) Proprietor: Samsung SDI Co., Ltd., Gyeonggi-do (KR); Robert Bosch GmbH, 70442 Stuttgart (DE)
(72) Inventor: Byun, Sang-Won, Gyeonggi-do (KR); Kim, Sung-Bae, Gyeonggi-do (KR); Kim, Yong-Sam, Gyeonggi-do (KR)
(74) Representative: Gulde Hengelhaupt Ziebig & Schneider

(56) References cited:
- DE-A1- 2 834 411
- FR-A- 1 145 874
- FR-A- 1 545 388
- FR-A1- 2 893 449
- US-A1- 2006 093 902
- US-B1- 6 383 234

## Description

### Technical Field

One or more embodiments of the present invention relate to a secondary battery and a battery module including a plurality of secondary batteries that are connected to one another.

### Related Art

Secondary batteries, which are re-chargeable batteries, are used as energy sources of mobile devices, electric cars, hybrid cars, electric bicycles, and uninterruptible power supplies. The secondary battery can be used, according to the type of an external device including the secondary battery, as a single battery type or as a battery module type in which a plurality of batteries are electrically connected to one another in one bundle.

US 2006/0093902 A1 discloses a secondary battery with deformation prevention straps for preventing the electrode assemblies from deforming. FR 2 893 449 A1, FR 1 545 388 A, and FR 1 145 874 A disclose batteries with electrode stacks held together by clips. US 6 383 234 B1 discloses a battery with a pair of electrode assemblies held together by clips.

### Disclosure of the Invention

One or more embodiments of the present invention include a secondary battery and a battery module that can prevent an electrode assembly functioning as a power generation device from being damaged and can stabilize electrical connection of the electrode assembly.

One or more embodiments of the present invention include a secondary battery and a battery module that can prevent an electrode assembly moving and thus improve durability and reliability of the electrode assembly.
A secondary battery according to the invention comprises an electrode assembly having a first electrode, a second electrode, and a separator interposed between the first and the second electrodes and wound in a jelly-roll shape, wherein the first electrode comprises a first coated portion coated with a first active material and a first non-coated portion not coated with the first active material and the second electrode comprises a second coated portion coated with a second active material and a second non-coated portion not coated with the second active material, a first current collector provided coupled to the first electrode, a second current collector provided coupled to the second electrode, and a case for mounting the electrode assembly therein. A retainer is further provided directly coupled to the electrode assembly and enclosing an end of the electrode assembly by enclosing at least a part of one of the first or second non-coated portions. The retainer further contacts one of the first or second current collectors forcing the respective first or second current collector against and fixing the respective first or second current collector to the respective first or second electrode.

The retainer may further be adapted to enclose at least a part of the respective first or second coated portion.

In one embodiment, a first current collector is provided coupled to the first electrode and a second current collector is provided coupled to the second electrode and the retainer is further coupled to one of the first or second current collectors.

The retainer may further be formed to compress the one end of the electrode assembly.

The retainer may comprise an accommodation portion adapted to accommodate the one end of the electrode assembly therein. The accommodation portion is preferably adapted to accommodate one of a first or second current collector together with a respective first or second non-coated portion of the first or second electrodes. The accommodation portion may further be adapted to accommodate a respective first or second coated portion of the first or second electrodes.

The accommodation portion may have an opening, the opening having a width comprising at least one of the following features; sized to press-fit the respective end of the electrode assembly into the accommodation portion; being smaller than the width of the electrode assembly in a non-assembled state; and being smaller than the width of the respective first or second non-coated portions of the electrode assembly in a non-assembled state. The width of the accommodation portion may decrease towards its opening.

The retainer may comprise an electrically insulating material. It may additionally or alternatively comprise an elastic material.

In one embodiment, the retainer comprises a gas-discharge hole formed to penetrate at least one wall of the retainer.

The retainer may be coupled or fixed to the case.

The retainer may comprise a first side wall having a first width, a second side wall having a second width, and a third wall linking the first and second side walls, wherein the first width is different from the second width.

In one embodiment, the retainer has the form of a clip.

According to an embodiment of the present invention, a retainer for fixing an electrode assembly is formed, and thus structural rigidity capable of withstanding external vibration or impact can be obtained, thereby improving durability and reliability of a product.

The electrode assembly may move inside a case due to external vibration or impact or may be damaged due to collision between the electrode assembly and the case, or electrical connection of the electrode assembly may be cut off. According to an embodiment of the present invention, the electrode assembly is fixed to an electrode current collecting member, and thus the electrode assembly can be prevented from moving and being damaged, thereby stabilizing electrical connection of the electrode assembly.

### Brief Description of the Drawings

FIG. 1 is a perspective view illustrating a battery module according to an embodiment of the present invention;
FIG. 2 is a vertical cross-sectional view of a secondary battery taken along a line II-II of FIG. 1;
FIG. 3 is a view for describing an electrode assembly of FIG. 2;
FIG. 4 is a cross-sectional view taken along a line IV-IV of FIG. 2;
FIG. 5 is a perspective view illustrating an assembly state of a retainer according to an embodiment of the present invention;
FIG. 6 is a view illustrating a retainer according to an embodiment of the present invention;
FIG. 7 is a perspective view illustrating an assembly state of a retainer according to another embodiment of the present invention;
FIG. 8 is a perspective view illustrating an assembly state of a retainer according to another embodiment of the present invention;
FIG. 9 is a cross-sectional view taken along a line IX-IX of FIG. 8; and
Fig. 10 is a view illustrating a retainer according to another embodiment of the invention.

### Detailed Description of the Drawings

Reference will now be made in detail to embodiments, examples of which are illustrated in the accompanying drawings, wherein like reference numerals refer to the like elements throughout.

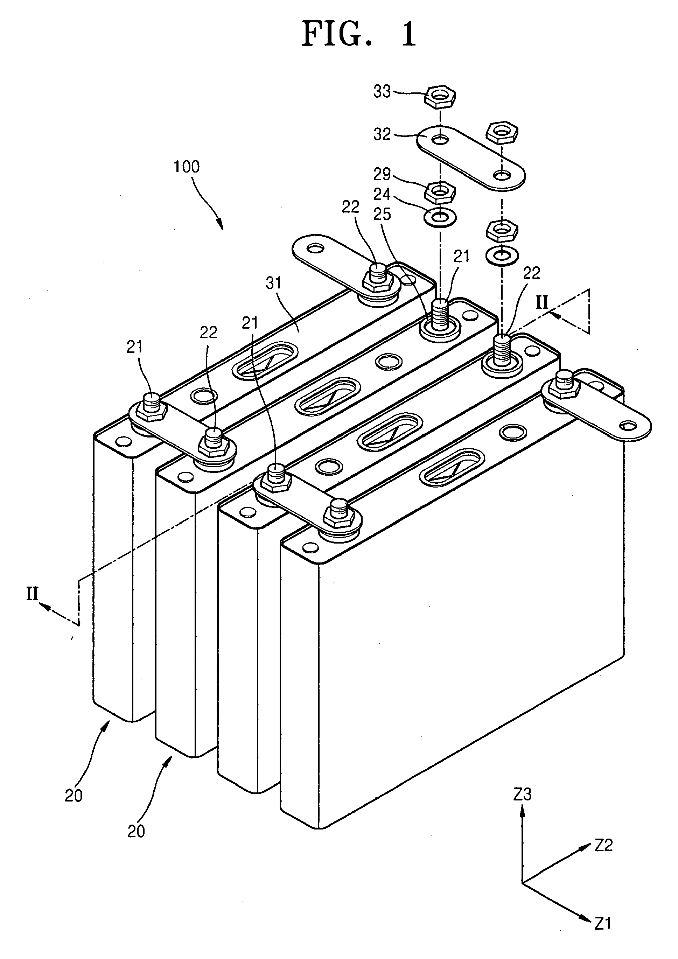

FIG. 1 is a perspective view illustrating a battery module according to an embodiment of the present invention.

Referring to FIG. 1, the battery module 100 includes at least one secondary battery 20, for example, more than two secondary batteries 20 that are arranged so as to form rows. For example, the battery module 100 may include the secondary batteries 20 that are arranged in a first direction Z1 and may have a stacked structure including the secondary batteries 20 arranged in a row or in more than two rows.

One pair of positive and negative electrode terminals 21 and 22 may be formed in each secondary battery 20 so as to protrude to the outside. A washer 24 and a nut 29 are coupled with each of the positive and negative electrode terminals 21 and 22 via an insulating gasket 25. The secondary batteries 20 are electrically connected to one another by connecting the positive and negative electrode terminals 21 and 22 to each other. In this case, the same polarities of the secondary batteries 20 may be connected to one another in parallel or opposite polarities thereof may be connected to one another in series. For example, the positive and negative electrode terminals 21 and 22 may be connected to each other via a bus bar 32. The secondary battery 20 may be connected to the adjacent secondary battery 20 via the bus bar 32. For example, both the positive and negative electrode terminals 21 and 22 have a bolt shape, and the positive and negative electrode terminals 21 and 22 of the adjacent secondary batteries 20 penetrate the bus bar 32 and are coupled to a nut 33, thereby electrically connecting the one pair of secondary batteries 20 to each other.

For example, the secondary batteries 20 may be alternately arranged so that the adjacent secondary batteries 20 having opposite polarities are adjacent to each other. In this case, the positive electrode terminal 21 of the secondary battery 20 may be connected to the negative electrode terminal 22 of the adjacent secondary battery 20 via the bus bar 32, and the negative electrode terminal 22 of the secondary battery 20 may be connected to another positive electrode terminal 21 of the adjacent another secondary battery 20 via bus bar 32.

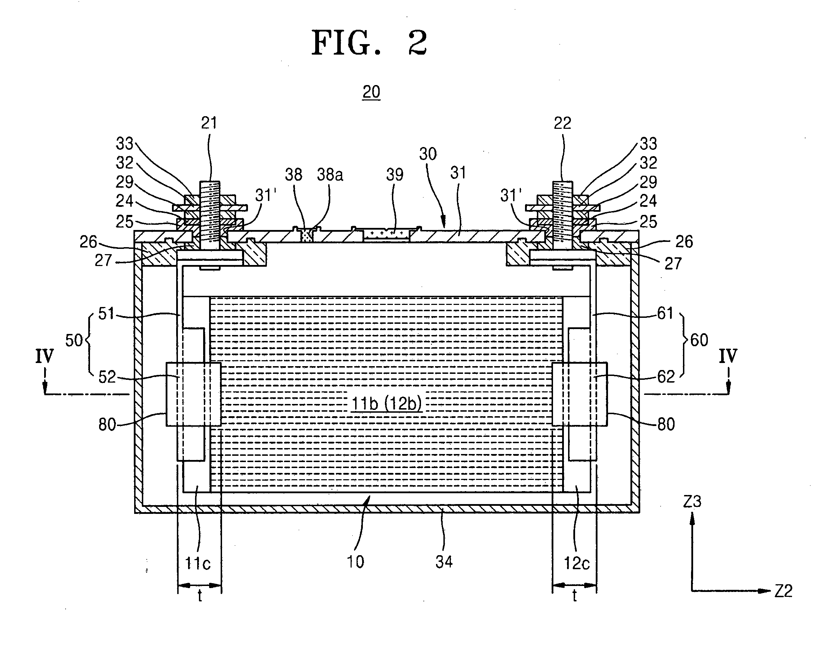

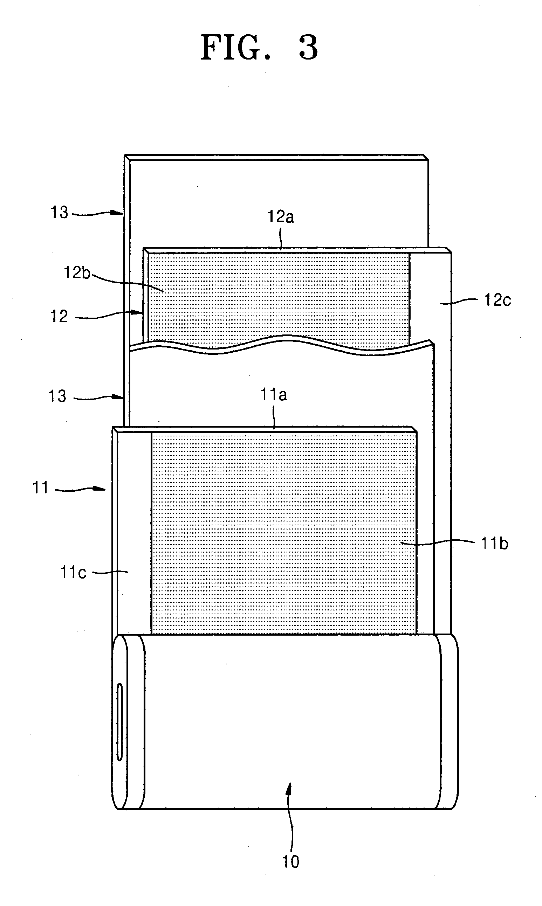

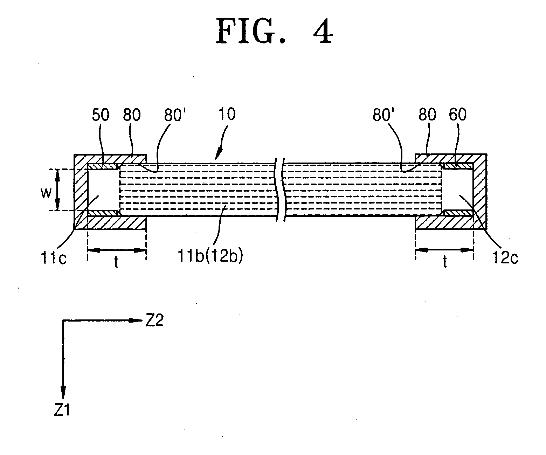

FIG. 2 is a vertical cross-sectional view of the secondary battery 20 taken along a line II-II of FIG. 1. FIG. 3 is a view for describing an electrode assembly 10 of FIG. 2. FIG. 4 is a cross-sectional view taken along a line IV-IV of FIG. 2.

Referring to FIGS. 2 through 4, the secondary battery 20 includes the electrode assembly 10, a case 34 accommodating the electrode assembly 10, and a cap assembly 30 closing an upper portion of the case 34. Referring to FIG. 3, the electrode assembly 10 includes a positive electrode plate 11, a negative electrode plate 12, and a separator 13 formed between the positive electrode plate 11 and the negative electrode plate 12. A stacked body including the positive electrode plate 11, the negative electrode plate 12 and the separator 13 may be wound in a jelly-roll shape. The positive electrode plate 11 includes a positive electrode current collector 11 a, a positive electrode active material layer 11 b that is formed in at least one surface of the positive electrode current collector 11 a, and a positive electrode non-coated portion 11c that is formed in an end portion of the positive electrode plate 11 in a width direction of the positive electrode current collector 11 a, wherein the positive electrode non-coated portion 11c is a region where the positive electrode active material layer 11 b is not formed.

The negative electrode plate 12 includes a negative electrode current collector 12a, a negative electrode active material layer 12b that is formed in at least one surface of the negative electrode current collector 12a, and a negative electrode non-coated portion 12c that is formed in an end portion of the positive electrode plate 12 in a width direction of the positive electrode current collector 12a, wherein the positive electrode non-coated portion 12c is a region where the positive electrode active material layer 12b is not formed.

In this case, the positive electrode non-coated portion 11c and the negative electrode non-coated portion 12c are respectively disposed in opposite ends of the electrode assembly 10 in a width direction of the electrode assembly 10. As illustrated in FIG. 2, the positive electrode non-coated portion 11c and the negative electrode non-coated portion 12c of the electrode assembly 10 are disposed to be inserted into both sides of the case 34. A positive electrode current collecting member 50 is electrically connected to the positive electrode non-coated portion 11c, and a negative electrode current collecting member 60 is electrically connected to the negative electrode non-coated portion 12c. Connection between the positive electrode non-coated portion 11c and the positive electrode current collecting member 50, and connection between the negative electrode non-coated portion 12c and the negative electrode current collecting member 60 may be performed by laser welding or ultrasonic welding.

For example, positive and negative electrode current collecting terminals 52 and 62 of the positive and negative electrode current collecting members 50 and 60 are respectively disposed to be overlapped on the positive and negative electrode non-coated portions 11c and 12c, and then welding is performed on the positive and negative electrode current collecting terminals 52 and 62 to form connecting portions.

Meanwhile, a retainer 80 is coupled to, preferably directly coupled to both ends of the electrode assembly 10. As an embodiment of the present invention, the retainer 80 may be formed as a clip type member having an accommodation portion 80' (see FIG. 4) so as to be coupled to the electrode assembly 10 and may be formed of a material having electrical insulating properties.

The electrode assembly 10 and the positive and negative electrode current collecting members 50 and 60 are inserted into the retainer 80 so as to form one body. In this case, a width of the accommodation portion 80' of the retainer 80 may be set to be so narrow that the electrode assembly 10 and the positive and negative electrode current collecting members 50 and 60 are coupled by forced insertion. Thus, the electrode assembly 10 and each of the positive and negative electrode current collecting members 50 and 60 may be firmly coupled to each other.

The electrode assembly 10 may move inside the case 34 due to external vibration or impact, or may be damaged due to collision between the electrode assembly 10 and the case 34. Furthermore, electrical connection between the electrode assembly 10 and each of the positive and negative electrode current collecting members 50 and 60 may be cut off due to movement of the electrode assembly 10. The retainer 80 may surround an end of the electrode assembly 10 to firmly fix the electrode assembly 10 to each of the positive and negative electrode current collecting members 50 and 60, and thus the electrode assembly 10 may be prevented moving inside the case 34 or being damaged, thereby stabilizing electrical connection of the electrode assembly 10. Thus, the retainer 80 may provide structural rigidity capable of withstanding external vibration or impact, thereby improving durability and reliability of a product.

As another embodiment of the present invention, the retainer 80 may be formed of an elastic material, accommodating the electrode assembly 10 and the positive and negative electrode current collecting members 50 and 60 in an elastically transformed state, and provide a bias force to the electrode assembly 10 and the positive and negative electrode current collecting members 50 and 60 that are inserted into the retainer 80.

The electrode assembly 10 and each of the positive and negative electrode current collecting members 50 and 60 may be inserted together into the retainer 80, so that the retainer 80 is not easily separated from the positive and negative electrode current collecting members 50 and 60 by fixing the electrode assembly 10 to the positive and negative electrode current collecting members 50 and 60. As an embodiment of the present invention, the retainer 80 may be coupled to any one of the positive electrode non-coated portion 11c and the negative electrode non-coated portion 12c of the electrode assembly 10, or may be coupled to both the positive electrode non-coated portion 11c and the negative electrode non-coated portion 12c of the electrode assembly 10, as illustrated in FIG. 2.

As an embodiment of the present invention, the accommodation portion 80' accommodating the electrode assembly 10 preferably has a a length t which is sufficient to insert the active material layers 11 b and 12b together with the positive and negative non-coated portions 11c and 12c into the retainer 80 in a width direction Z2 (a second direction). The retainer 80 also covers the active material layers 11 b and 12b, and thus a contact surface between the retainer 80 and the electrode assembly 10 is enlarged and coupling therebetween is increased, thereby firmly fixing the electrode assembly 10 to the retainer 80.

The positive and negative non-coated portions 11 c and 12c of the electrode assembly 10, which respectively correspond to the positive electrode current collector 11a and the negative electrode current collector 12a, are sheet substrates on which an active material is not coated, and thus the positive and negative non-coated portions 11c and 12c have lower rigidities compared to the active material layers 11 b and 12b. In an embodiment in which the retainer 80 covers only the positive and negative non-coated portions 11c and 12c of the electrode assembly 10, the electrode assembly 10 may move due to crumpling or bending of the positive and negative non-coated portions 11c and 12c. The retainer 80 is designed to cover the active material layers 11 b and 12b that have relatively high rigidity, and thus the electrode assembly 10 may be firmly fixed.

Meanwhile, the cap assembly 30 includes a cap plate 31 closing an upper portion of the case 34. The cap plate 31 and the case 34 may be tightly coupled by laser welding. The cap plate 31 includes a safety bent 39. The safety bent 39 is designed to fracture in order to provide a discharging path of gas when an inner pressure of the case 34 exceeds a predetermined point. Furthermore, the cap plate 31 includes an electrolyte injection port 38a for injecting an electrolyte into the case 34. After the injection of the electrolyte is finished, the electrolyte injection port 38a is closed by a sealing cap 38.

The positive electrode current collecting member 50 is electrically connected to the positive electrode terminal 21. The positive electrode terminal 21 penetrates the cap plate 31 and is exposed to the outside from the cap plate 31 at a predetermined length. The negative electrode current collecting member 60 is electrically connected to the negative electrode terminal 22. The negative electrode terminal 22 penetrates the cap plate 31 and is exposed to the outside from the cap plate 31 at a predetermined length. The cap plate 31 includes a terminal hole 31' through which the positive and negative electrode terminals 21 and 22 penetrate.

The positive and negative electrode terminals 21 and 22 are coupled in an insulated state from the cap plate 31. Insulating gaskets 25 and 27 are formed between each of the positive and negative electrode terminals 21 and 22 and the cap plate 31 so as to insulate them from each other. For example, the insulating gaskets 25 and 27 include a lower gasket 27 and an upper gasket 25. The lower gasket 27 is inserted into the terminal hole 31' from a lower portion of the cap plate 31, and the upper gasket 25 is inserted into the terminal hole 31' from an upper portion of the cap plate 31. Meanwhile, an insulating sealing material 26 may be further formed so as to insulate each of the positive and negative electrode terminals 21 and 22 from the cap plate 31 or insulate each of the positive and negative electrode terminals 21 and 22 from the case 34.

For example, both the positive and negative electrode terminals 21 and 22 protruding from the upper portion of the cap plate 31 have a bolt shape having a screw thread. The washer 24 and the nut 29 are coupled to the positive and negative electrode terminals 21 and 22. The positive and negative electrode terminals 21 and 22 penetrate the bus bar 32 and are coupled to the nut 29, thereby connecting the adjacent one pair of secondary batteries 20. The nut 33 is coupled to the bus bar 32 so as to fix the bus bar 32 to the positive and negative electrode terminals 21 and 22.

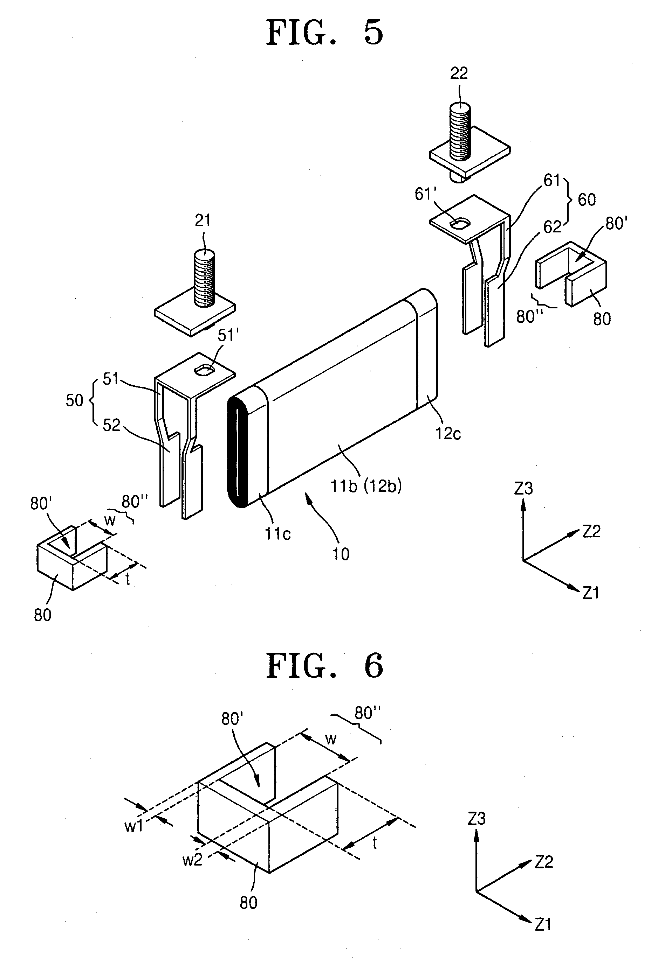

FIG. 5 is a perspective view illustrating an assembly state of the retainer 80 according to an embodiment of the present invention. The positive and negative electrode current collecting members 50 and 60 are respectively coupled to both ends of the electrode assembly 10. The positive and negative electrode current collecting members 50 and 60 are coupled to the positive and negative electrode terminals 21 and 22 that are exposed to the outside of the case 34. For example, terminal holes 51' and 61' are respectively formed in upper portions of the positive and negative electrode current collecting members 50 and 60, and the positive and negative electrode terminals 21 and 22 are partially inserted into the terminal holes 51' and 61' respectively. TIG-welding may be performed along a boundary between the positive and negative electrode current collecting members 50 and 60 and the positive and negative electrode terminals 21 and 22.

The positive and negative electrode current collecting members 50 and 60 electrically connect the electrode assembly 10 to the positive and negative electrode terminals 21 and 22, and form a path of charging/discharging current between the electrode assembly 10 and each of the positive and negative electrode terminals 21 and 22. Battery current generated from the electrode assembly 10 may be applied to the outside of the secondary battery 20 via the positive and negative electrode terminals 21 and 22. The positive and negative electrode current collecting members 50 and 60 may include the positive and negative electrode current collecting terminals 52 and 62, coupled to the electrode assembly 10, and positive and negative electrode connecting members 51 and 61 that extend from the positive and negative electrode current collecting terminals 52 and 62 and are respectively coupled to the positive and negative electrode terminals 21 and 22.

The retainer 80 is coupled to each of both ends of the electrode assembly 10. The retainer 80 may include a pair of the retainers 80 so as to correspond to a positive electrode and a negative electrode of the electrode assembly 10.

The retainer 80 may be coupled, preferably directly to the electrode assembly 10 so as to surround each of the positive and negative electrode current collecting members 50 and 60 together with the end of the electrode assembly 10. Each of the positive and negative electrode current collecting members 50 and 60 and the electrode assembly 10 are coupled to each other by being inserted into the retainer 80. In this case, the accommodation portion 80' of the retainer 80 for defining an accommodation space of the electrode assembly 10 may be formed to be sufficiently narrow so that the positive and negative electrode current collecting members 50 and 60 and the electrode assembly 10 are coupled to the retainer 80 by forced insertion. For example, the retainer 80 may be coupled to the end of the electrode assembly 10 in a state where the retainer 80 presses the end of the electrode assembly 10, so that the positive and negative non-coated portions 11c and 12c of the electrode assembly 10 are concentrated.

As an embodiment of the present invention, the retainer 80 is coupled to the electrode assembly 10 in a state where a width w of the accommodation portion 80' is enlarged, so that the retainer 80 accommodates the positive and negative electrode current collecting members 50 and 60 and the electrode assembly 10. Furthermore, the retainer 80 provides a bias force so as to firmly fix the electrode assembly 10 to the positive and negative electrode current collecting members 50 and 60. In this case, the retainer 80 may be formed of an elastic material.

FIG. 6 is a view illustrating the retainer 80 according to an embodiment of the present invention.

Referring to FIG. 6, the retainer 80 may be formed as a clip type member having the accommodation portion 80' so that the positive and negative electrode current collecting members 50 and 60 and the electrode assembly 10 are inserted into the retainer 80. In this case, coupling between each of the positive and negative electrode current collecting members 50 and 60 and the electrode assembly 10, which are inserted into the accommodation portion 80', may be controlled by controlling the width w of the accommodation portion 80'. As an embodiment of the present invention, the accommodation portion 80' of the retainer 80 may be formed to be offset form the center of the retainer 80 along a first direction Z1 that is perpendicular to a main surface of the secondary battery 20. That is, a first rib width w1 from a side of the retainer 80 to the accommodation portion 80' and a second rib width w2 from the other side of the retainer 80 to the accommodation portion 80' may be designed to have different values (w1≠w2).

In this case, the main surface of the secondary battery 20 is a surface that occupies the largest area in a nearly rectangular shape forming an exterior of the secondary battery 20. For example, the first direction Z1 may be a direction in which the secondary batteries 20 are arranged in the battery module 100 (see FIG. 1). The accommodation portion 80' accommodating the positive and negative electrode current collecting members 50 and 60 may be respectively formed to correspond to locations of the positive and negative electrode current collecting members 50 and 60, and may be formed to be offset from the center of the retainer 80 according to a detailed design of the secondary battery 20.

The accommodation portion 80' of the retainer 80 may be formed to have a length t sufficient to cover the positive and negative non-coated portions 11c and 12c and parts of the active material layers 11 b and 12b of the electrode assembly 10. As a contact area between the retainer 80 and the electrode assembly 10 is enlarged, coupling therebetween increases, and thus the electrode assembly 10 may be further firmly fixed to the retainer 80 by the increased coupling. Furthermore, from a structural rigidity point of view, the electrode assembly 10 is supported by the active material layers 11 band 12b having higher resistibility against transformation, instead of by the positive and negative non-coated portions 11c and 12c where active materials are not formed, and thus the electrode assembly 10 may be further firmly fixed to the retainer 80.

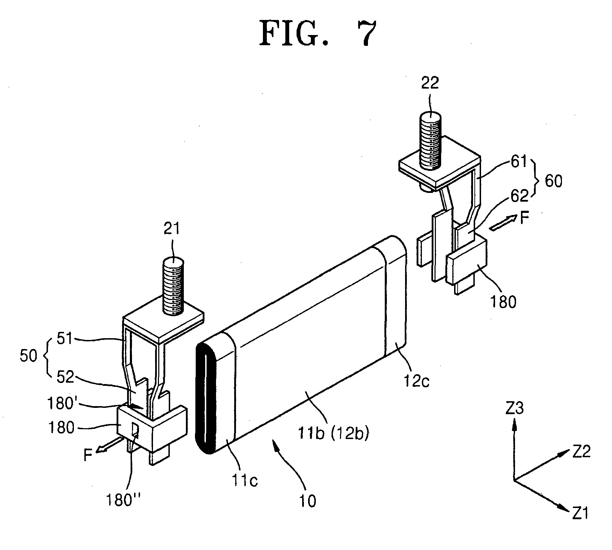

FIG. 7 is a perspective view illustrating an assembly state of a retainer 180 according to another embodiment of the present invention. The retainer 180 is coupled to, preferably directly to an end of an electrode assembly 10. In FIG. 7, a gas discharging hole 180" is formed in the retainer 180. As an embodiment of the present invention, the gas discharging hole 180" may be formed to face an accommodation portion 180' of the retainer 180, and the electrode assembly 10 inserted into the accommodation portion 180' may be exposed to the outside through the gas discharging hole 180". The gas discharging hole 180" provides a discharging path F of gas generated in the electrode assembly 10, and thus a risk of explosion due to accumulation of gas pressure may be reduced.

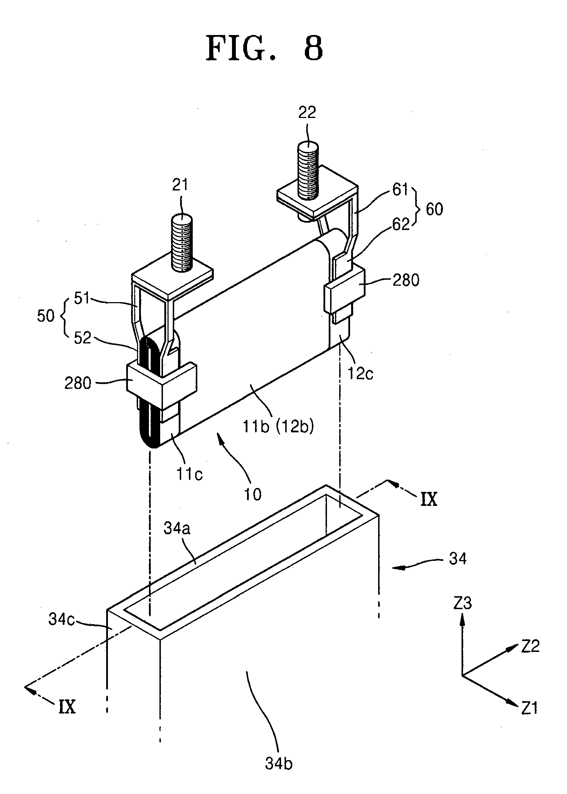

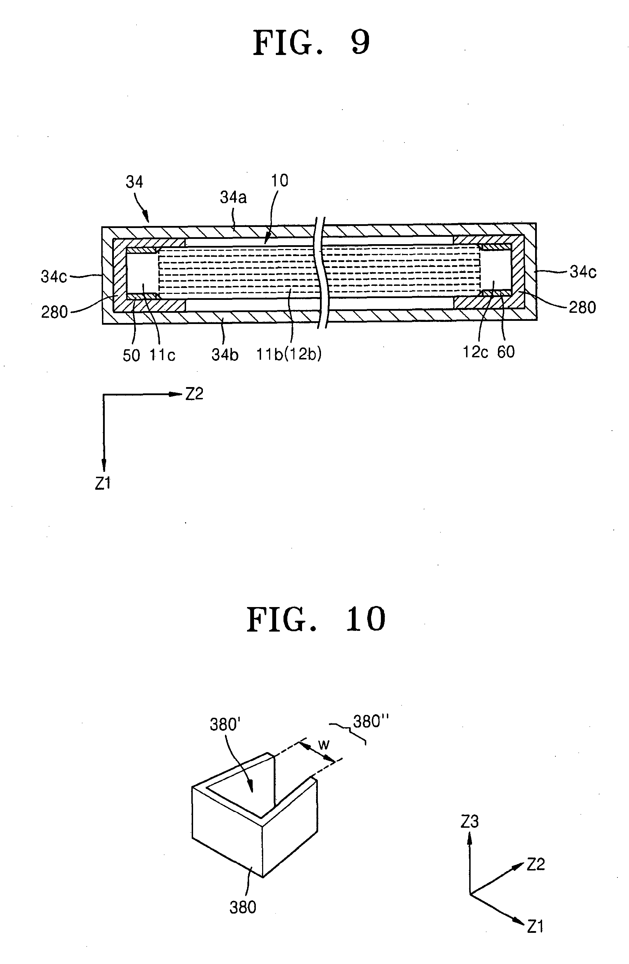

FIG. 8 is a perspective view illustrating an assembly state of a retainer 280 according to another embodiment of the present invention. FIG. 9 is a cross-sectional view taken along a line IX-IX of FIG. 8.

Referring to FIGS. 8 and 9, the retainer 280 may be coupled to, preferably directly to an electrode assembly 10 so as to surround the electrode assembly 10. The retainer 280 may contact inner walls 34a, 34b and 34c of a case 34 and may be supported by the inner walls 34a, 34b and 34c of the case 34. For example, the retainer 280 may be tightly coupled to main surfaces 34a and 34b, facing each other in a first direction Z1, and both side surfaces 34c of the case 34. The location of the retainer 280 for fixing the electrode assembly 10 is restricted by the inner walls 34a, 34b and 34c of the case 34, and thus the electrode assembly 10 may be further firmly fixed.

The retainer 280 may be tightly coupled to at least one surface of the case 34. For example, the retainer 280 may be tightly coupled to the side surface 34c of the case 34 in order to restrict movement of the electrode assembly 10 in a second direction Z2. The movement of the electrode assembly 10 may be restricted by the retainer 280 supported by the both side surfaces 34c facing each other in the second direction Z2, and thus the location of the electrode assembly 10 may be further firmly fixed.

Referring now to Fig. 10, the retainer 380 includes a first side wall, a second side wall, and a third side wall linking the first and second side walls to each other. The first and second side walls are extending from the third side wall each at an angle of less than 90°. In other words, the distance between the first and second side walls decreases with increasing distance from the third side wall, i.e. the first and second side walls approach each other in a direction towards the opening 380". The first and second side walls have an inclined shape forming an acute angle with the third side wall. Accordingly, the width of the accommodation portion 380' corresponding to the distance between the first and second side walls decreases towards the opening 380" having a width w.

The accommodation portion 380' of the retainer 380 may receive the positive or negative current collecting member and the electrode assembly as previously explained. In the present embodiment, the coupling between each of the positive and negative electrode current collecting member and the electrode assembly may be controlled and improved by varying the width w of the opening 380".

In the embodiment shown in Fig. 10, since the width w of the opening 380" is designed to have a smaller value than the length of the third wall, the coupling strength between the electrode assembly and the current collecting member is improved.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A secondary battery (20) comprising:
an electrode assembly (10) having a first electrode (11), a second electrode (12), and a separator (13) interposed between the first and the second electrodes (11, 12) and wound in a jelly-roll shape, wherein the first electrode (11) comprises a first coated portion (11b) coated with a first active material and a first non-coated portion (11c) not coated with the first active material and the second electrode (12) comprises a second coated portion (12b) coated with a second active material and a second non-coated portion (12c) not coated with the second active material;
a first current collector (50) provided coupled to the first electrode (11);
a second current collector (60) provided coupled to the second electrode (12);
a case (34) for mounting the electrode assembly (10) therein; and
a retainer (80, 180, 280, 380) is provided directly coupled to the electrode assembly (10) and enclosing an end of the electrode assembly (10) by enclosing at least a part of one of the first or second non-coated portions (11c, 12c),
**characterized in that**
the retainer (80, 180, 280) further contacts one of the first or second current collectors (50, 60) forcing the respective first or second current collector (50, 60) against and fixing the respective first or second current collector (50, 60) to the respective first or second electrode (11, 12).

2. Secondary battery (20) according to claim 1, wherein the retainer (80, 180, 280, 380) is further adapted to enclose at least a part of the respective first or second coated portion (11b, 12b).

3. Secondary battery (20) according to claim 2, wherein the retainer (80, 180, 280, 380):
is formed to compress the one end of the electrode assembly (10).

4. Secondary battery (20) according to any of the previous claims, wherein the retainer (80, 180, 280, 380) comprises an accommodation portion (80', 180', 280', 380') adapted to accommodate the one end of the electrode assembly (10) therein.

5. Secondary battery (20) according to claim 4, wherein the accommodation portion (80', 180', 280', 380') is adapted to accommodate one of a first or second current collector (50, 60) together with a respective first or second non-coated portion (11c, 12c) of the first or second electrodes (11, 12).

6. Secondary battery (20) according to claim 5, wherein the accommodation portion (80', 180', 280', 380') is further adapted to accommodate a respective first or second coated portion (11b, 12c) of the first or second electrodes (11, 12).

7. Secondary battery (20) according to any of claims 4 to 6, wherein the accommodation portion (80', 180', 280', 380') has an opening (80", 380"), the opening (80", 380") having a width (w) comprising at least one of the following features:
sized to press-fit the respective end of the electrode assembly (10) into the accommodation portion (80', 180', 280', 380");
being smaller than the width of the electrode assembly (10) in a non-assembled state; and
being smaller than the width of the respective first or second non-coated portions (11c, 12c) of the electrode assembly (10) in a non-assembled state.

8. Secondary battery (20) according to any of the previous claims 4 to 7, wherein the width of the accommodation portion (380') decreases towards its opening (380").

9. Secondary battery (20) according to any of the previous claims, wherein the retainer (80, 180, 280, 380) comprises an electrically insulating material and/or an elastic material.

10. Secondary battery (20) according to any of the previous claims, wherein the retainer (180) comprises a gas-discharge hole (180") formed to penetrate at least one wall of the retainer (180).

11. Secondary battery (20) according to any of the previous claims, wherein the retainer (280) is coupled or fixed to the case (34).

12. Secondary battery (20) according to any of the previous claims 3 to 11, wherein the retainer (80, 180, 280, 380) comprises a first side wall having a first width (w₁), a second side wall having a second width (w₂), and a third wall linking the first and second side walls, wherein the first width (w₁) is different from the second width (w₂) such that accommodation portion (80') accommodating the one of the first or second current collectors (50, 60) is formed to be offset from the center of the retainer (80) along the width direction of the retainer (80).

13. Secondary battery (20) according to any of the previous claims, wherein the retainer (80, 180, 280, 380) has the form of a clip.

## Patentansprüche

1. Sekundärbatterie (20), aufweisend:
eine Elektrodenanordnung (10), die eine erste Elektrode (11), eine zweite Elektrode (12) und einen Separator (13), der zwischen der ersten und der zweiten Elektrode (11, 12) angeordnet ist, aufweist und in einer Wickelform gewickelt ist, wobei die erste Elektrode (11) einen ersten beschichteten Abschnitt (11 b), der mit einem ersten aktiven Material beschichtet ist, und einen ersten unbeschichteten Abschnitt (11c) aufweist, der nicht mit dem ersten aktiven Material beschichtet ist, und wobei die zweite Elektrode (12) einen zweiten beschichteten Abschnitt (12b), der mit einem zweiten aktivem Material beschichtet ist, und einen zweiten nicht beschichteten Abschnitt (12c) aufweist, der nicht mit dem zweiten aktiven Material beschichtet ist;
einen ersten Stromkollektor (50), der derart bereitgestellt wird, dass er mit der ersten Elektrode (11) gekoppelt ist;
einen zweiten Stromkollektor (60), der derart bereitgestellt wird, dass er mit der zweiten Elektrode (12) gekoppelt ist;
ein Gehäuse (34) zum Darin-Anbringen der Elektrodenanordnung (10); und
eine Halterung (80, 180, 280, 380), die derart bereitgestellt wird, dass sie direkt mit der Elektrodenanordnung (10) gekoppelt ist und ein Ende der Elektrodenanordnung (10) dadurch umgibt, dass sie zumindest einen Teil eines des ersten oder zweiten nicht beschichteten Abschnitts (11c, 12c) umgibt,
**dadurch gekennzeichnet, dass**
die Halterung (80, 180, 280) weiterhin mit einem des ersten oder zweiten Stromkollektors (50, 60) in Kontakt steht, wobei sie den jeweiligen ersten oder zweiten Stromkollektor (50, 60) an der jeweiligen ersten oder zweiten Elektrode (11, 12) fest andrückt und den jeweiligen ersten oder zweiten Stromkollektor (50, 60) an der jeweiligen ersten oder zweiten Elektrode (11, 12) befestigt.

2. Sekundärbatterie (20) nach Anspruch 1, wobei die Halterung (80, 180, 280, 380) weiterhin ausgebildet ist, zumindest einen Teil des jeweiligen ersten oder zweiten beschichteten Abschnitts (11 b, 12b) zu umgeben.

3. Sekundärbatterie (20) nach Anspruch 2, wobei die Halterung (80, 180, 280, 380):
ausgebildet ist, das eine Ende der Elektrodenanordnung (10) zusammenzudrücken.

4. Sekundärbatterie (20) nach einem der vorhergehenden Ansprüche, wobei die Halterung (80, 180, 280, 380) einen Aufnahmeabschnitt (80', 180', 280', 380') aufweist, der ausgebildet ist, das eine Ende der Elektrodenanordnung (10) darin aufzunehmen.

5. Sekundärbatterie (20) nach Anspruch 4, wobei der Aufnahmeabschnitt (80', 180', 280', 380') ausgebildet ist, einen eines ersten oder zweiten Stromkollektors (50, 60) zusammen mit einem jeweiligen ersten oder zweiten unbeschichteten Abschnitt (11c, 12c) der ersten oder zweiten Elektrode (11, 12) aufzunehmen.

6. Sekundärbatterie (20) nach Anspruch 5, wobei der Aufnahmeabschnitt (80', 180', 280', 380') weiterhin ausgebildet ist, einen jeweiligen ersten oder zweiten beschichteten Abschnitt (11 b, 12c) der ersten oder zweiten Elektrode (11, 12) aufzunehmen.

7. Sekundärbatterie (20) nach einem der Ansprüche 4 bis 6, wobei der Aufnahmeabschnitt (80', 180', 280', 380') eine Öffnung (80", 380") aufweist, wobei die Öffnung (80", 380") eine Breite (w) aufweist, die zumindest eines der folgenden Merkmale aufweist:
sie ist derart bemessen, dass sie das jeweilige Ende der Elektrodenanordnung (10) in den Aufnahmeabschnitt (80', 180', 280', 380") einpresst;
sie ist kleiner als die Breite der Elektrodenanordnung (10) im nicht montierten Zustand; und
sie ist kleiner als die Breite des jeweiligen ersten oder zweiten unbeschichteten Abschnitts (11c, 12c) der Elektrodenanordnung (10) im nicht montierten Zustand.

8. Sekundärbatterie (20) nach einem der vorhergehenden Ansprüche 4 bis 7, wobei die Breite des Aufnahmeabschnitts (380') zu seiner Öffnung (380") hin abnimmt.

9. Sekundärbatterie (20) nach einem der vorhergehenden Ansprüche, wobei die Halterung (80, 180, 280, 380) ein elektrisch isolierendes Material und/oder ein elastisches Material aufweist.

10. Sekundärbatterie (20) nach einem der vorhergehenden Ansprüche, wobei die Halterung (180) ein Gasentladungsloch (180") aufweist, das ausgebildet ist, durch zumindest eine Wand der Halterung (180) zu dringen.

11. Sekundärbatterie (20) nach einem der vorhergehenden Ansprüche, wobei die Halterung (280) am Gehäuse (34) angekoppelt oder befestigt ist.

12. Sekundärbatterie (20) nach einem der vorhergehenden Ansprüche 3 bis 11, wobei die Halterung (80, 180, 280, 380) eine erste Seitenwand, die eine erste Breite (w₁) aufweist, eine zweite Seitenwand, die eine zweite Breite (w₂) aufweist, und eine dritte Wand aufweist, die die erste und zweite Seitenwand verbindet, wobei sich die erste Breite (w₁) derart von der zweiten Breite (w₂) unterscheidet, dass der Aufnahmeabschnitt (80'), der den einen des ersten oder zweiten Stromkollektors (50, 60) aufnimmt, derart ausgebildet ist, dass er von der Mitte der Halterung (80) entlang der Breitenrichtung der Halterung (80) versetzt ist.

13. Sekundärbatterie (20) nach einem der vorhergehenden Ansprüche, wobei die Halterung (80, 180, 280, 380) die Form einer Klammer aufweist.

## Revendications

1. Batterie secondaire (20) comprenant :
un ensemble d'électrodes (10) ayant une première électrode (11), une deuxième électrode (12), et un séparateur (13) interposé entre les première et deuxième électrodes (11, 12) et enroulé en roulé à la gelée, dans lequel la première électrode (11) comprend une première partie revêtue (11 b) qui est revêtue d'un premier matériau actif et une première partie non-revêtue (11c) qui n'est pas revêtue du premier matériau actif et la deuxième électrode (12) comprend une deuxième partie revêtue (12b) qui est revêtue d'un deuxième matériau actif et une deuxième partie non-revêtue (12c) qui n'est pas revêtue du deuxième matériau actif ;
un premier collecteur de courant (50) pourvu en étant couplé à la première électrode (11) ;
un deuxième collecteur de courant (60) pourvu en étant couplé à la deuxième électrode (12) ;
un boîtier (34) pour y monter l'ensemble d'électrodes (10) ; et
un élément de retenue (80, 180, 280, 380) est pourvu en étant directement couplé à l'ensemble d'électrodes (10) et renfermant une extrémité de l'ensemble d'électrodes (10) en renfermant au moins une partie de l'une des première et deuxième parties non-revêtues (11c, 12c),
**caractérisée en ce que** :
l'élément de retenue (80, 180, 280) entre par ailleurs en contact avec l'un des premier et deuxième collecteurs de courant (50, 60) en pressant le premier ou le deuxième collecteur de courant respectif (50, 60) contre la première ou la deuxième électrode respective (11, 12) et en le fixant à celle-ci.

2. Batterie secondaire (20) selon la revendication 1, dans laquelle l'élément de retenue (80, 180, 280, 380) est en outre conçu pour renfermer au moins une partie de la première ou de la deuxième partie revêtue respective (11 b, 12b).

3. Batterie secondaire (20) selon la revendication 2, dans laquelle l'élément de retenue (80, 180, 280, 380) :
est formé de manière à comprimer ladite extrémité de l'ensemble d'électrodes (10).

4. Batterie secondaire (20) selon l'une des revendications précédentes, dans laquelle l'élément de retenue (80, 180, 280, 380) comprend une partie de logement (80', 180', 280', 380') conçue pour y loger ladite extrémité de l'ensemble d'électrodes (10).

5. Batterie secondaire (20) selon la revendication 4, dans laquelle la partie de logement (80', 180', 280', 380') est conçue pour loger l'un d'un premier ou deuxième collecteur de courant (50, 60) conjointement avec une première ou deuxième partie non-revêtue respective (11 c, 12c) des première ou deuxième électrodes (11, 12).

6. Batterie secondaire (20) selon la revendication 5, dans laquelle la partie de logement (80', 180', 280', 380') est en outre conçue pour loger une première ou deuxième partie revêtue respective (11 b, 12c) des première ou deuxième électrodes (11, 12).

7. Batterie secondaire (20) selon l'une des revendications 4 à 6, dans laquelle la partie de logement (80', 180', 280', 380') possède une ouverture (80", 380"), l'ouverture (80", 380") ayant une largeur (w) comprenant au moins l'une des caractéristiques suivantes :
elle est dimensionnée de manière à ajuster à la presse l'extrémité respective de l'ensemble d'électrodes (10) dans la partie de logement (80', 180', 280', 380") ;
elle est inférieure à la largeur de l'ensemble d'électrodes (10) dans un état non-assemblé ; et
elle est inférieure à la largeur de la première ou de la deuxième partie non-revêtue respective (11c, 12c) de l'ensemble d'électrodes (10) dans un état non-assemblé.

8. Batterie secondaire (20) selon l'une des revendications précédentes 4 à 7, dans laquelle la largeur de la partie de logement (380') diminue en direction de son ouverture (380").

9. Batterie secondaire (20) selon l'une des revendications précédentes, dans laquelle l'élément de retenue (80, 180, 280, 380) comprend un matériau électriquement isolant et/ou un matériau élastique.

10. Batterie secondaire (20) selon l'une des revendications précédentes, dans laquelle l'élément de retenue (180) comprend un trou d'évacuation de gaz (180") formé pour pénétrer au moins une paroi de l'élément de retenue (180).

11. Batterie secondaire (20) selon l'une des revendications précédentes, dans laquelle l'élément de retenue (280) est couplé ou fixé au boîtier (34).

12. Batterie secondaire (20) selon l'une des revendications précédentes 3 à 11, dans laquelle l'élément de retenue (80, 180, 280, 380) comprend une première paroi latérale ayant une première largeur (w₁), une deuxième paroi latérale ayant une deuxième largeur (w₂), et une troisième paroi reliant les première et deuxième parois latérales, la première largeur (w₁) étant différente de la deuxième largeur (w₂) de sorte que la partie de logement (80') logeant l'un des premier et deuxième collecteurs de courant (50, 60) soit formée de manière à être décalée par rapport au centre de l'élément de retenue (80) le long de la direction de la largeur de l'élément de retenue (80).

13. Batterie secondaire (20) selon l'une des revendications précédentes, dans laquelle l'élément de retenue (80, 180, 280, 380) a la forme d'une agrafe.
